# EUROPÄISCHE PATENTSCHRIFT

(11) **EP 3 243 699 B1**
(45) Veröffentlichungstag und Bekanntmachung des Hinweises auf die Patenterteilung: **13.11.2019**
(21) Anmeldenummer: 17166508.6
(22) Anmeldetag: 13.04.2017
(51) Int. Cl.: B60P 3/20, B60H 1/00, B60H 1/32

(54) **KÜHLSYSTEM FÜR TRANSPORTEINHEIT**
COOLING SYSTEM FOR A TRANSPORT VEHICLE
SYSTÈME DE REFROIDISSEMENT POUR VÉHICULE DE TRANSPORT

(30) Priorität: 13.05.2016 DE 102016005898
(43) Veröffentlichungstag der Anmeldung: 15.11.2017
(73) Patentinhaber: Liebherr-Transportation Systems GmbH & Co. KG, 2100 Korneuburg (AT)
(72) Erfinder: Schilling, Florian, 2100 Leobendorf (AT); Radler, Dominik, 1160 Wien (AT); Presetschnik, Andreas, 1160 Wien (AT); Kitanoski, Filip, 1060 Wien (AT); Hille, Andreas, 71272 Renningen (DE)
(74) Vertreter: Laufhütte, Dieter

(56) Entgegenhaltungen:
- DE-A1- 2 350 508
- DE-A1-102012 004 655
- DE-U1-202011 005 395
- JP-A- 2008 120 131
- US-A- 3 831 395
- US-A- 5 129 235
- US-A1- 2010 300 133
- US-B1- 6 945 071

## Beschreibung

Die vorliegende Erfindung betrifft ein Kühlsystem für eine Transporteinheit, um zu transportierende Waren während eines Transportvorgangs innerhalb eines vordefinierten Temperaturbereichs zu kühlen.

Typischerweise sind die mit dem Kühlsystem zu kühlenden Waren verderbliche Fracht wie Früchte, Gemüse oder Blumen. Während des Transports ist es möglich, dass verderbliche Fracht spezifische Gase absondert, die die Qualität der Fracht beeinträchtigt. Daher ist es üblich für eine Frischluftzufuhr zu sorgen, die im Zusammenspiel mit der durch das Kühlsystem konditionierten Luft dazu beiträgt, die Haltbarkeit der in dem konditionierten Raum transportierten Waren zu verlängern. Da die Zusammensetzung der Ware dafür verantwortlich ist, inwiefern für die Haltbarkeit der Ware schädliche Gase abgesondert werden, ist es erforderlich, die Gaskonzentration zu überwachen und gegebenenfalls Gegenmaßnahmen einzuleiten.

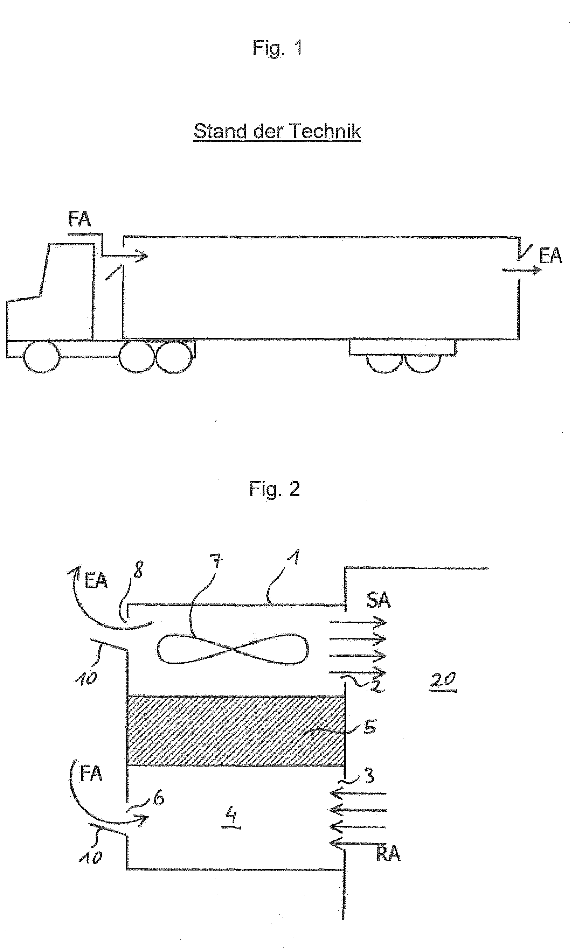

Bisher ist es üblich, sowohl bei Transporteinheiten auf Schiffen, also in der Regel Container, als auch bei Sattelaufliegern die Stellung einer Frischluftklappe zum Zuführen von Frischluft per Hand einzustellen. In einem offenen Zustand tritt also Umgebungsluft in den konditionierten Raum ein, wohingegen in einem geschlossenen Zustand Umgebungsluft nicht in die Transporteinheit eindringen kann. Am Beispiel einer Transporteinheit für einen Sattelauflieger (vgl. Fig. 1) erkennt man eine typischerweise an der Zugmaschine vorhandene Frischluftöffnung zum Einströmen von Umgebungsluft / Frischluft in den zu konditionierenden Ram, hier der Sattelauflieger. Dabei befindet sich mindestens eine Frischluftöffnung neben dem Kältesystem und mindestens eine Abluftöffnung (auch: Fortluftöffnung) in der am Heck angeordneten Türe des Sattelaufliegers. Dabei müssen beide Öffnungen über eine Klappe per Hand vom Betreiber, typischerweise der Fahrer der Zugmaschine, geöffnet bzw. geschlossen werden. Eine aktive Messung der Luftparameter innerhalb des Sattelaufliegers wird normalerweise nicht vorgenommen sondern es wird für den Transport eine bestimmte Klappenstellung empfohlen. Eine genaue Einstellung des Reifegases, CO₂-Gehalts, der Feuchte bzw. anderer wichtiger Parameter, die zur Bereitstellung einer geregelten Atmosphäre in den Transportcontainer erforderlich wären, erfolgt daher nicht.

Die US 6 945 071 B1 zeigt dabei ein herkömmliches Kühlsystem für eine Transporteinheit, das sämtliche Merkmale aus dem Oberbegriff des Anspruchs 1 offenbart.

Es ist ein Ziel der vorliegenden Erfindung ein Kühlsystem vorzusehen, das die vorstehend beschriebenen Nachteile überwindet.

Dies gelingt mit Hilfe eines Kühlsystems, dass die Merkmale des Anspruchs 1 aufweist.

Durch das Vorsehen der Frischluftöffnungen in dem Kühlsystem entfällt die aus dem Stand der Technik vorgeschlagene Zusatzöffnung zum Einleiten von Frischluft FA oder zum Ableiten von Fortluft EA in einer der Raumwände der Transporteinheit. Dadurch sinkt der k-Wert einer mit dem erfindungsgemäßen Kühlsystem gekühlten Transporteinheit, da die Isolation der Wände verbessert ist. Der k-Wert beschreibt hierbei ein Maß für die Güte der Wärmedämmung und gibt an, wie viel Wärme durch ein Bauteil verloren geht.

Ein weiterer Vorteil, der sich durch die Umsetzung der Erfindung ergibt, liegt darin, dass die Frischluft nun nicht mehr unkonditioniert über eine Klappe in den zu konditionierenden Raum eindringt, sondern in den Luftkanal des Kühlsystems tritt und von dort aus über die Zuluftöffnung des Kühlsystems in identischer Weise wie die durch das Kühlsystem gekühlte Luft in den zu kühlenden Raum eingeleitet werden kann. Dabei ist zu beachten, dass die Zuluftöffnung eines Kühlsystems über Leitungen oder dergleichen die heruntergekühlte Luft in etwa gleichmäßig in der Transporteinheit verteilt. Das Verteilen der aus der Umgebung eingeströmten Umgebungsluft (auch: Frischluft) über die Zuluftöffnung zusammen mit der regulär konditionierten Luft des Kühlsystems bringt daher Vorteile hinsichtlich der Raumverteilung mit sich.

Die Zuluftöffnung zum Ausströmen von konditionierter Luft ist dabei die Öffnung des Kühlsystems, aus der die durch das Kühlsystem gekühlte Luft zum Herabkühlen eines zu konditionierenden Raums in diesen eintritt. Die Umluftöffnung zum Einströmen von Luft aus einem zu konditionierenden Raum beschreibt dabei diejenige Öffnung, aus der die Luft des zu konditionierenden Raums in das Kühlsystem strömt, die durch das Kühlsystem herabzukühlen ist. Oftmals wird diese Luft auch als Rückluft bezeichnet. Dabei ist in dem die Umluftöffnung und die Zuluftöffnung verbindenden Luftkanal ein Verdampferelement eines Kühlkreises angeordnet, das über einen Wärmeaustausch die durch die Umluftöffnung eintretende Luft herabkühlt, sodass die die Zuluftöffnung verlassende Luft eine hierzu verringerte Temperatur besitzt und/oder eine verminderte Feuchte aufweist.

Nach einer weiteren optionalen Modifikation der vorliegenden Erfindung ist das Verdampferelement derart in dem Luftkanal angeordnet, dass eine durch die Umluftöffnung einströmende und durch Zuluftöffnung ausströmende Luft durch das Verdampferelement strömen muss. Das Verdampferelement ist demnach so in dem Strömungspfad der Luft angeordnet, dass die in die Umluftöffnung eintretende Luft, die es herabzukühlen gilt, vor einem Verlassen des Kühlsystems durch die Zuluftöffnung aufgrund eines Durchströmens des Verdampferelements heruntergekühlt wird.

Nach der Erfindung ist die erste Frischluftöffnung zum Einströmen von Frischluft derart angeordnet, dass eine durch die erste Frischluftöffnung einströmende Umgebungsluft die Zuluftöffnung ohne Verlassen des Luftkanals nur nach einem Durchströmen des Verdampferelements erreicht.

Die erste Frischluftöffnung ist demnach so angeordnet, dass sämtliche hierin eintretende Umgebungsluft die Zuluftöffnung nur bei einem Passieren des Verdampferelements erreicht. Bei dieser Betrachtung ist nicht vorgesehen, dass die durch die erste Frischluftöffnung eintretende Umgebungsluft den Luftkanal durch eine andere als die Zuluftöffnung verlässt.

Aus dieser Anordnung ergeben sich weitere Vorteile gegenüber dem Stand der Technik. In der typischen Strömungsrichtung der Luft, also von der Umluftöffnung in Richtung der Zuluftöffnung bzw. von der Frischluftöffnung in Richtung der Zuluftöffnung ist die erste Frischluftöffnung demnach stromaufwärts vor dem Verdampferelement angeordnet. Durch diese Anordnung kann sichergestellt werden, dass bei Bedarf ungewollter Feuchteeintrag durch die Frischluft in den zu konditionierenden Raum unterbleibt. Die Feuchte bzw. das Wasser in der Umgebungsluft wird hierbei am Verdampfer auskondensiert und gelangt nicht in den zu konditionierenden Raum, sodass es zu keiner Beeinflussung des Kühlgutes hinsichtlich eines nicht gewünschten Feuchteeintrags kommt. Es ist daher möglich, die Atmosphäre innerhalb des zu kühlenden Raums durch die Zufuhr von Frischluft positiv zu beeinflussen ohne jedoch das Feuchtigkeitsniveau der in dem zu kühlenden Raum vorherrschenden Feuchtigkeit zu beeinflussen. So kann beispielsweise bei einem Transportcontainer die Notwendigkeit aufkommen, den CO₂-Wert aufgrund von Warenausdünstungen anzupassen, jedoch die Feuchtigkeit trotzdem auf einem sehr geringen Niveau zu belassen. Das bloße Öffnen einer Frischluftklappe, wie sie der Stand der Technik beschreibt, kann dabei unter Umständen die CO₂-Zusammensetzung in die gewünschte Richtung bewegen, jedoch ist der Feuchtigkeitseintrag durch die Frischluft abhängig von dem aktuell herrschenden Umgebungsklima der Transporteinheit. Dieser Nachteil wird mit dem erfindungsgemäßen System überwunden.

Nach einer weiteren Fortbildung der Erfindung umfasst das Kühlsystem einen in dem Luftkanal angeordneten Zuluftlüfter zum Ausblasen von Luft aus der Zuluftöffnung, zum Ansaugen von Luft in die Umluftöffnung und zum Ansaugen von Umgebungsluft durch die Frischluftöffnung. Da der Zuluftlüfter auch dazu dient, Umgebungsluft bzw. Frischluft durch die erste Frischluftöffnung in den Luftkanal zu saugen, ist es möglich, die Frischluftöffnung in ihren Abmessungen kompakt zu dimensionieren. Im Vergleich zu im Stand der Technik bekannten Frischluftklappen, die in einer Wand eines zu kühlenden Raums vorgesehen sind, sind die Abmessungen der Klappe und somit auch der k-Wert kleiner, was eine bessere Wärmedämmeigenschaft bedeutet. Im Stand der Technik erfolgt die Konvektion, also der Austausch zwischen Umgebungsluft und der im Inneren eines zu kühlenden Raums herrschenden Atmosphäre, ohne die durch den Zuluftlüfter erzwungene Luftströmung. In anderen Worten saugt der Zuluftlüfter Frischluft an, sodass die Frischluftöffnung im Vergleich zu den im Stand der Technik bekannten Frischluftklappen deutlich geringer dimensioniert sein kann, was sich positiv auf die Dämmeigenschaften auswirkt.

Vorzugsweise umfasst die Erfindung ferner eine Fortluftöffnung zum Ausströmen oder Abgeben von Luft aus dem Luftkanal an die Umgebung, wobei vorzugsweise die Fortluftöffnung bei einer Luftströmung von der Umluftöffnung und/oder der ersten Frischluftöffnung in Richtung des Zuluftlüfters stromabwärts des Zuluftlüfters angeordnet ist.

Nach einer weiteren bevorzugten Ausführungsform umfasst das Kühlsystem ferner eine Fortluftöffnung zum Ausströmen von Luft aus einem mit dem System zu konditionierenden Raum, wobei ein Kondensatorlüfter eines Kühlkreises des Kühlsystems dazu ausgelegt ist, Luft aus der Fortluftöffnung auszublasen. Im Gegensatz zu der vorstehend beschriebenen Fortluftöffnung ist diese Fortluftöffnung so angeordnet, dass der Kondensatorlüfter, also der Lüfter eines Verflüssigers und nicht des Verdampfers, wie der oben beschriebene Zuluftlüfter, eine Luft aus der Fortluftöffnung ausbläst. Dazu wird aus dem zu konditionierenden Raum Luft in den Kondensatorluftbereich des Kühlsystems eingeleitet, die dann zusammen mit der durch den Kondensator strömenden Luft nach außen abgegeben wird.

Nach einer weiteren bevorzugten Ausführungsform kann die aus der Umluft abgezweigte Luftmenge, die später als Fortluft abgegen wird, als Teilluftstrom über den Verflüssiger und/oder zum Beaufschlagen einer Unterkühlungsstrecke des Kältekreislaufes genutzt werden.

Nach der Erfindung ist die zweite Frischluftöffnung zum Einströmen von Umgebungsluft in den Luftkanal derart angeordnet, dass eine durch die zweite Frischluftöffnung einströmende Umgebungsluft die Zuluftöffnung ohne Verlassen des Luftkanals ohne Durchströmen des Verdampferelements erreicht. In anderen Worten ist also bei einer Strömung der zweite Frischluftöffnung in Richtung der Zuluftöffnung und bei einer Strömung von der Umluftöffnung in Richtung der Zuluftöffnung die zweite Frischluftöffnung derart angeordnet, dass sie stromabwärts des Verdampferelements angeordnet ist.

Nach der Erfindung sind mindestens zwei Frischluftöffnungen vorhanden, von denen eine erste derart angeordnet ist, dass eine durch die erste Frischluftöffnung einströmende Umgebungsluft die Zuluftöffnung ohne Verlassen des Luftkanals nur nach einem Durchströmen des Verdampferelements erreicht und ein zweite Frischluftöffnung derart angeordnet ist, dass eine durch die zweite Frischluftöffnung einströmende Umgebungsluft die Zuluftöffnung ohne Verlassen des Luftkanals ohne Durchströmen des Verdampferelements erreicht. Dadurch wird die Möglichkeit geschaffen, Frischluft auch nach dem Verdampfer anzusaugen und eine eventuell gewünschte Feuchte in den Transportcontainer, beispielsweise einen Kühl-Sattelauflieger, einzubringen.

Weiter kann gemäß einer vorteilhaften Ausführungsform der Erfindung vorgesehen sein, dass die Frischluftöffnungen und/oder die mindestens eine Fortluftöffnung mit einem jeweiligen Verschlussmechanismus versehen ist, der dazu ausgelegt ist, die Menge der durch die jeweilige Öffnung strömenden Luft zu regulieren, vorzugsweise stufenlos zu regulieren. Der Verschlussmechanismus kann demnach den durch die jeweilige Öffnung strömenden Luftfluss stufenlos regulieren.

Vorzugsweise umfasst das Kühlsystem ferner eine Messeinrichtung zum Bestimmen eines Luftparameters und eine Steuereinheit zum Ansteuern des jeweiligen Verschlussmechanismus der Frischluftöffnungen und/oder mindestens einer Fortluftöffnung, wobei die Steuereinheit dazu ausgelegt ist, in Abhängigkeit von mindestens einem durch die Messeinrichtung bestimmten Luftparameter einen Verschlussmechanismus zu steuern. Dabei wird also in Abhängigkeit des mindestens einen bestimmten Luftparameters der Zustand des Verschlussmechanismus über die Steuereinheit geregelt.

Vorzugsweise umfasst die Messeinrichtung einen Sensor zum Bestimmen von mindestens einem Luftparameter, insbesondere einer Temperatur, einer Feuchte, eines CO₂-Gehalts, eines bestimmten Gases und/oder eines Luftdrucks, wobei vorzugsweise der Sensor dazu ausgelegt ist, die Luftparameter für eine Luft innerhalb und/oder außerhalb des durch das Kühlsystem zu konditionierenden Raums zu erfassen.

Weiter kann, wenn die Messeinrichtung einen Unterdruck in den zu konditionierenden Raum im Vergleich zur Umgebung feststellt, die Steuereinheit dazu ausgelegt sein, den Verschlussmechanismus einer Frischluftöffnung in die Offen-Stellung zu überführen, um das Öffnen einer Transporteinheit zu erleichtern. Bei starkem Wechsel der Innentemperatur oder unterschiedlicher Höhe bei der Be- und Entladung der mit dem Kühlsystem zu kühlenden Transporteinheit kann ein Unterdruck entstehen, der das Öffnen einer Türe erschwert. Dieser Unterdruck kann durch das Öffnen des Verschlussmechanismus ausgeglichen werden. Zusätzlich kann mit dem Verschließen des Verschlussmechanismus der Fortlüftöffnung bei einem gleichzeitigen Lufteintrag aus der Umgebung ein Überdruck in der Transporteinheit erzeugt werden, der bei einer geöffneten Türe der Transporteinheit den Feuchte- bzw. Wärmeeintrag reduziert.

Nach einer weiteren bevorzugten Ausführungsform der Erfindung umfasst der jeweilige Verschlussmechanismus der Frischluftöffnungen und/oder der mindestens einen Fortluftöffnung eine Verriegelung, um eine Dichtheit in einem geschlossenen Zustand des Verschlussmechanismus zu gewährleisten.

Gemäß einer optionalen Modifikation der Erfindung ist das Kühlsystem für eine Transporteinheit ein Kühlsystem für einen Kühl-Sattelauflieger, einen Kühlanhänger oder einen Kühltransportcontainer.

Weitere Vorteile, Merkmale und Einzelheiten werden anhand der nachfolgenden Beschreibung der Figuren ersichtlich. Hierbei zeigen:
Fig. 1: eine Prinzipskizze zur Darstellung einer im Stand der Technik verwendeten Frischluftzufuhr für einen Transportcontainer,
Fig. 2: eine Prinzipskizze zur Darstellung eines illustrativen Beispiels eines Kühlsystems,
Fig. 3: eine Prinzipskizze eines weiteren illustrativen Beispiels eines Kühlsystems,
Fig. 4: eine Prinzipskizze der Erfindung nach einer weiteren Ausführungsform, und
Fig. 5: eine Skizze eines Transportcontainers zur Darstellung einer der Vorteile, die mit der vorliegenden Erfindung erreicht werden können.

Figur 1 zeigt vorbekannten Stand der Technik. Typischerweise wird hier die Frischluftzufuhr für einen Transportcontainer direkt am Container, bzw. durch Öffnungen in der Containerwand umgesetzt. So befinden sich bei einem Kühl-Sattelauflieger mindestens eine Klappe neben dem Kühlsystem und mindestens eine Klappe in der am Heck des Containers angeordneten Zugangstüre. Beide Klappen müssen per Hand vom Betreiber der Anlage geöffnet bzw. geschlossen werden. Dabei ist eine aktive Messung des CO₂-Gehalts oder der Feuchte bzw. anderer wichtiger Parameter zur Bereitstellung einer geregelten Atmosphäre im Inneren des Containers nicht vorgesehen. Bei einem Fortbewegen des Kühl-Sattelaufliegers strömt Frischluft FA (engl. fresh air) in den Container hinein und Fortluft EA (engl. exhaust air) aus dem Container hinaus. Die Öffnung des Containers, durch die die Frischluft oder Umgebungsluft FA einströmt, ist dabei unabhängig von dem Kühlsystem in einer Containerwand angeordnet. Selbiges gilt auch für die Öffnung, durch die die Fortluft EA aus dem Container abgeführt wird.

Figur 2 zeigt ein illustratives Beispiel eines Kühlsystems 1, welches an einem mit dem Kühlsystem 1 zu kühlenden Transportcontainer 20 angeordnet ist. Es ist ersichtlich, dass die Darstellung lediglich den Verdampferbereich eines Kühlsystems 1 zeigt und der Kondensatorbereich des Kühlsystems 1 nicht dargestellt ist.

Das Kühlsystem 1 weist dabei eine Zuluftöffnung 2 auf, durch die von dem Kühlsystem 1 gekühlte Luft in den zu kühlenden Transportcontainer 20 strömt. Diese Luft wird Zuluft SA (englisch: supply air) genannt. Weiter umfasst das Kühlsystem 1 eine Umluftöffnung 3 zum Einströmen von Luft RA, die von einem zu konditionierenden Raum 20 in das Kühlsystem 1 strömt. Die durch die Zuluftöffnung 3 strömende Luft wird auch als Umluft RA (englisch: return air) bezeichnet. In dem Kühlsystem 1 ist weiter ein Luftkanal 4 vorgesehen, der die Umluftöffnung 3 mit der Zuluftöffnung 2 verbindet. Um die in das Kühlsystem 1 einströmende Umluft RA im Vergleich zu der Zuluft SA abzukühlen, ist in dem Luftkanal 4 ein Wärmetauscher 5, insbesondere ein Verdampferelement 5 eines Kühlkreises, vorgesehen. Die in das Kühlsystem 1 einströmende Umluft RA strömt dabei auf ihrem Weg in Richtung der Zuluftöffnung 2 durch das Verdampferelement 5 und wird dabei abgekühlt und/oder entfeuchtet bevor die Luft über die Zuluftöffnung 2 als Zuluft SA dem Transportcontainer 20 erneut zugeführt wird. Der Clou dieses illustrativen Beispiels ist es, eine erste Frischluftöffnung 6 zum Einströmen von Umgebungsluft FA (englisch: fresh air) in den Luftkanal 4 vorzusehen. Die erste Frischluftöffnung 6 ist dabei eine Öffnung in dem Kühlsystem 1, die den Luftkanal 4 mit der Umgebungsluft FA verbindet. Im Stand der Technik ist dabei das Vorsehen einer energetisch ineffizienten Frischluftklappe in einer Wand eines Transportcontainers nicht erforderlich, so dass die Frischluft über das Kühlsystem 1 selbst zugeführt werden kann.

Für das Vorsehen der gewünschten Luftströmung von der Umluftöffnung 3 in Richtung zu der Zuluftöffnung 2 bzw. von der ersten Frischluftöffnung 6 in Richtung der Zuluftöffnung 2 ist ein Zuluftlüfter 7 vorgesehen, der Luft durch die erste Frischluftöffnung 6 und die Umluftöffnung 3 in den Luftkanal 4 ansaugt und Luft aus dem Luftkanal 4 in Richtung der Zuluftöffnung 2 ausbläst. Durch das Ansaugen von Frischluft durch die erste Frischluftöffnung 6 ist es möglich die mit einem Verschlussmechanismus 10 zu verschließende erste Frischluftöffnung 6 kleiner zu dimensionieren als dies bisher im Stand der Technik üblich war. Dies liegt daran, dass die bisher im Stand der Technik verwendeten Frischluftöffnungen nicht mit einem Lüfter interagieren, der ein aktives Ansaugen von Frischluft ermöglicht. Durch das Verkleinern der Klappengröße verringert sich der k-Wert eines mit dem Kühlsystem 1 ausgestatteten Transportcontainers 20. Der so erreichte niedrigere Wärmedurchgangskoeffizient (k-Wert) steht hierbei für eine bessere Wärmedämmeigenschaft.

Die Frischluftöffnung 6 ist dabei so in dem Kühlsystem 1 angeordnet, dass eine hierin einströmende Luft bei einer Strömung hin zur Zuluftöffnung 2 das Verdampferelement 5 passieren muss, bzw. durch das Verdampferelement 5 strömen muss. Bei einer Luftströmung von der ersten Frischluftöffnung 6 hin zur Zuluftöffnung 2 ist die Frischluftöffnung demnach stromaufwärts des Verdampferelements 5 angeordnet. Durch diese Anordnung ist es möglich, eine Frischluft FA über die Zuluftöffnung 2 dem Transportcontainer 20 zu Verfügung zu stellen, und dabei gleichzeitig die Feuchtigkeit der Frischluft FA aufgrund des Passierens des Verdampferelements 5 zu modifizieren. Die Gaszusammensetzung im Inneren des zu kühlenden Raums 20 kann dadurch wie gewünscht verändert werden, ohne jedoch eine ungewünschte Feuchtigkeit aus der Umgebungsluft einzubringen.

Weiter erkennt man in der Figur eine Fortluftöffnung 8 zum Ausströmen von Luft EA (englisch: exhaust air), die eine in dem Luftkanal 4 strömende Luft an die Umgebung abgibt. Die Fortluftöffnung 8 verfügt genau wie die Frischluftöffnung 6 über einen Verschlussmechanismus 10, der vorzugsweise stufenlos einen Öffnungsgrad der zugehörigen Öffnung einstellen kann. Dabei ist ersichtlich, dass der Zuluflüfter 7 die in dem Luftkanal 4 strömende Luft durch die Fortluftöffnung 8 nach außen ausbläst. Je nach Öffnungsgrad der Fortluftöffnung 8, der mit Hilfe des Verschlussmechanismus 10 variiert werden kann, gibt der Zuluftlüfter 7 mehr oder weniger Luft aus dem Luftkanal 4 an die Umgebung ab. Der Vorteil die Fortluftöffnung 8 an dem Kühlsystem 1 vorzusehen, ergibt sich in analoger Weise wie zum Vorsehen der Frischluftöffnung 6. Durch das aktive Ausblasen der Fortluft aus der Fortluftöffnung 8 ist es möglich, die Dimensionierung der Fortluftöffnung 8 im Gegensatz zu einer bisherigen Fortluftklappe zu verringern. Dadurch ist es erneut möglich, den k-Wert des Transportcontainers positiv zu beeinflussen.

Durch das Realisieren einer automatischen aktiven Belüftung direkt mit dem Zuluftstrom SA, bei der definierte Luftmengen von Frischluft FA und Fortluft EA angesaugt bzw. ausgestoßen werden, ist es möglich, Frischluft FA mit der Rückluft RA aus dem Trailer zu mischen.

In der Figur ist ein illustratives Beispiel dargestellt, in der die Frischluft FA stromaufwärts des Verdampfers angesaugt wird, wobei ein Ansaugen stromabwärts des Verdampfers ebenfalls möglich ist.

Die Verschlussmechanismen 10 für die erste Frischluftöffnung 6 und die Fortluftöffnung 8 können dabei automatisch stellbare Verschlussmechanismen wie Klappen, die in eine gewünschte Position bewegbar sind. Aufgrund der dort herrschenden tiefen Temperaturen ist es hierbei ratsam auf kälteresistente Mechanismen zurückzugreifen. So würde sich hierbei ein Stangenantrieb anbieten. Ein Öffnen bzw. Schließen der jeweiligen Öffnung könnte alternativ durch eine Pneumatikvorrichtung durchgeführt werden. Dabei kann zum Erkennen, ob der Verschlussmechanismus die zugehörige Öffnung schließt, ein Taster vorgesehen sein. Optional sollte auch eine Verriegelung des Verschlussmechanismus vorhanden sein, um Dichtheit zu gewährleisten und möglichst keine zusätzliche Wärme in das System einzubringen.

Um die Atmosphäre im Inneren des Transportcontainers 20 zu regulieren, kann zusätzlich auch ein Feuchtesensor bzw. CO₂-Sensor angebracht werden. Dann ist es möglich, mit Hilfe einer mit dem mindestens einem Sensor in Verbindung stehenden Steuereinheit einen Verschlussmechanismus 10 in Abhängigkeit eines detektierten Werts anzusteuern. Durch die Koppelung der Sensorik mit einer oder aller der Verschlussmechanismen 10 kann die Effizienz des Systems durch das Vermeiden von unnötiger zusätzlicher Lasteinbringung von außen weiter verbessert werden (=beispielsweise Warmluft, die nicht erforderlich ist).

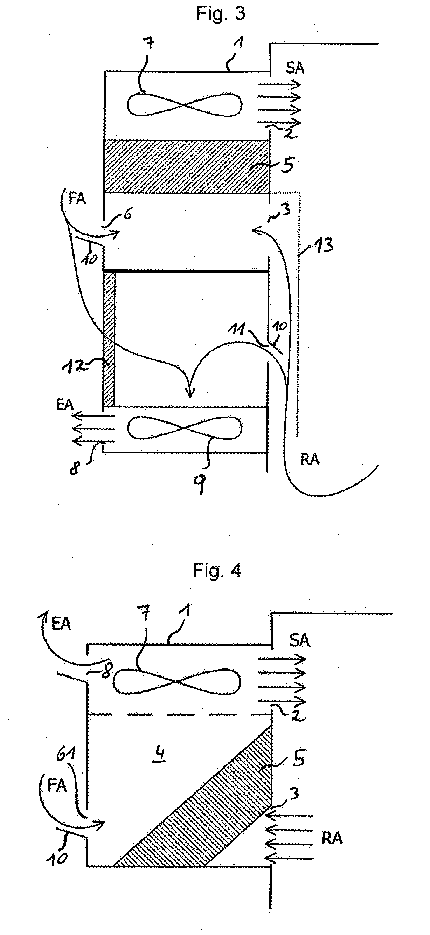

Figur 3 zeigt die Prinzipskizze eines weiteren illustrativen Beispiels. Identische Bauteile des Kühlsystems 1 sind hierbei mit denselben Bezugszeichen versehen wie in Figur 2. Man erkennt, dass die Fortluftöffnung 8 zum Ausblasen der Fortluft EA sich nun nicht mehr im Verdampferbereich des Kühlsystems 1 befindet sondern im Kondensatorluftbereich angeordnet ist. Die Fortluftöffnung 8 ist demnach so angeordnet, dass ein Kondensatorlüfter 9 Luft von dem Inneren des mit dem Kühlsystem 1 zu kühlenden Transportcontainers 20 ansaugt und durch Fortluftöffnung 8 an die Umgebung abgibt. Zum Ansaugen der Luft aus der Transporteinheit ist eine Öffnung 11 vorgesehen, die über einen Verschlussmechanismus 10 stufenlos geöffnet und geschlossen werden kann. Über diese Öffnung 11 kann der Kondensatorlüfter 9 eine Umluft RA ansaugen und über die Fortluftöffnung 8 an die Umgebung abgeben. Die Fortluftöffnung 8 dient auch dazu, die den Kondensator 12 durchströmende Frischluft FA an die Umgebung abzugeben. Mit dem Bezugszeichen 13 ist ein Luft-Leitblech bezeichnet, das dafür sorgt, Luft aus einem bodennahen Niveau des Transportcontainers der Öffnung 11 bzw. der Umluftöffnung 3 zuzuführen.

Hier wird also die Möglichkeit genutzt, den durch den Kondensatorlüfter entstehenden Unterdruck zu nutzen, um eine Umluft RA abzusaugen, bevor diese ein Verdampferelement 5 erreicht. In einer energetischen Gesamtbetrachtung ist dies von Vorteil, da die nach außen zu führende Luftmenge nicht erst über das Verdampferelement 5 konditioniert wird. Dies ist auch nicht erforderlich, da die Temperatur der nach außen zu führenden Luftmenge bzw. deren Feuchtigkeit irrelevant ist. Von daher ist es bei einem Abzweigen des nach außen zu führenden Luftstroms vor dem Verdampfer für den verbleibenden durch den Verdampfer 5 zu konditionierenden Luftstrom von Vorteil, da dieser effizienter auf ein gewünschtes Temperaturniveau gekühlt werden kann. Bei einer gleichbleibenden Verdampfergröße ist schlicht die Menge der zu kühlenden Luft geringer, sodass dies energetisch effizienter durchführbar ist. Die Öffnung 11 kann auch als Ansaugöffnung 11 bezeichnet werden, deren Zweck es ist, eine Luft aus einem zu konditionierenden Raum in einen Kondenstorluftbereich einströmen zu lassen. Dies erfolgt vorzugsweise mit Hilfe der Sogwirkung eines Kondensatorlüfters, vorzugsweise im Zusammenspiel mit dem Öffnungsgrad des Verstellmechanismus 10 der Ansaugöffnung 11, wobei der Kondensatorlüfter die durch die Ansaugöffnung 11 angesaugte Luft bei einem Betrieb des Lüfters 9 nach außen über eine Fortluftöffnung 8 abgibt. Dabei wird der von dem zu konditionierenden Raum angesaugte Luftstrom mit einem durch den Kondensator 12 strömenden Luftstrom vereinigt und gemeinsam über die Fortluftöffnung 8 nach außen an die Umgebung abgegeben. Das Vorsehen einer Fortluftöffnung im Bereich des Zuluftlüfters 7 ist dabei dann nicht mehr zwingend erforderlich.

Figur 4 zeigt eine Ausführungsform der Erfindung, bei der eine zweite Frischluftöffnung 61 des Kühlsystems 1 in einer Strömungsrichtung von der Umluftöffnung 3 in Richtung der Zuluftöffnung 3 stromabwärts des Verdampferelements 5 angeordnet ist. Die zweite Frischluftöffnung 61, die stromabwärts zu dem Verdampferelement 5 angeordnet ist, ist nach der Erfindung zusammen mit einer stromaufwärts des Verdampferelements 5 angeordneten ersten Frischluftöffnung 6 vorhanden. Damit besteht die Möglichkeit, Frischluft auch nach dem Verdampfer anzusaugen und somit eventuell gewünschte Feuchtigkeit in den Trailer einbringen zu können, sollte dies gewünscht sein. Die stromaufwärts angesaugte Frischluft besitzt hingegen eine bestimmte Feuchtigkeit, die am Verdampfer auskondensiert und dadurch nicht in den Transportcontainer gelangt. Somit führt dies nicht zu einer Beeinflussung des Kühlgutes. Das Vorsehen der stromabwärts angeordneten zweiten Frischluftöffnung 61, die ebenfalls über einen Verschlussmechanismus 10 verfügt, wird insbesondere bei dem Aufbau des Kühlsystems 1 vorgesehen, in dem das Verdampferelement 5 schräg angeordnet ist.

Durch das Vorsehen von Sensoren zum Bestimmen von Luftparametern oder einem Luftparameter von Lufteigenschaften der in dem zu kühlenden Raum vorhandenen Luft oder von Lufteigenschaften der Umgebungsluft ist es mit Hilfe einer Steuereinheit möglich, in Abhängigkeit des mindestens einen bestimmten Luftparameters die Verschlussmechanismen der Frischluftöffnung bzw. der Frischluftöffnungen und/oder der Fortluftöffnung in Abhängigkeit des mindestens einen gemessenen Parameters einzustellen. Dadurch ist es möglich eine Atmosphäre innerhalb des zu kühlenden Transportcontainers zu regeln.

Ein weiterer Punkt, der mit dem erfindungsgemäßen Kühlsystem verwirklicht werden kann, ist das Vorsehen einer Öffnungshilfe eines Transportcontainers durch einen Druckausgleich. Bei einem starken Wechsel der Innentemperatur oder unterschiedlicher Höhen bei der Beladung und der Entladung des Transportcontainers kann ein Unterdruck entstehen, der das Türöffnen des Transportcontainers erschwert. Wird nun mit Hilfe einer Sensorik eine Diskrepanz zwischen Innendruck des Transportcontainers und Umgebungsdruck ermittelt, kann durch ein Verschließen der Fortluftöffnung und einer beibehaltenen Öffnung der Zuluftöffnung ein Überdruck in dem Transportcontainer erzeugt werden, der das Öffnen der Türe des Transportcontainers erleichtert. Zudem ist das Erzeugen eines Überdrucks bei einer offenen Türe des Transportcontainers von Vorteil, um den Feuchtigkeits- bzw. Wärmeeintrag zu reduzieren. Aufgrund des Überdrucks in dem Transportcontainer strömt bei einem Öffnen einer Türe des Transportcontainers mehr Luft aus dem Container hinaus als Luft in ihn einströmen kann.

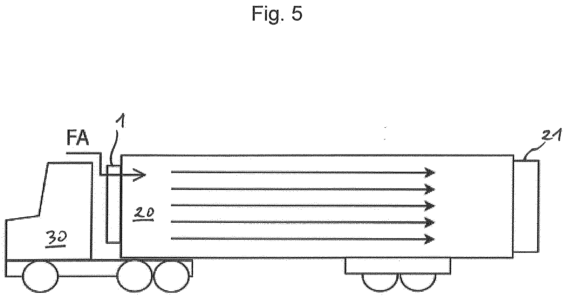

Figur 5 zeigt eine schematische Darstellung des oben beschriebenen Zustands. Man erkennt die Zugmaschine 30 sowie den am Heck der Zugmaschine 30 angeordneten Transportcontainer 20. Der Transportcontainer 20 kann wie dargestellt ein Kühl-Sattelauflieger sein. Bei dem Öffnen einer Türe 21 des Transportcontainers 20 wird Frischluft FA durch das Kühlsystem 1 angesaugt wobei gleichzeitig die Fortluftöffnung des Kühlsystems 1 geschlossen ist. Dadurch würde bei geschlossener Türe 21 der Druck im Inneren des Transportcontainers 20 erhöht werden. Bei einem Öffnen der Türe 21 strömt jedoch die zusätzlich von außen angesogene Frischluft FA, die ebenfalls durch das Kühlsystem 1 konditionierbar sein kann, durch den Transportcontainer in Richtung Türe 21 und dann nach außen. Dadurch wird die Menge an einströmender Luft, die von der Umgebung durch die Türöffnung in den Sattelauflieger eingetragen wird, verringert.

Der in dem Transportcontainer herrschende Druck ist dabei größer als der Umgebungsdruck.

Weiter ist es mit dem erfindungsgemäßen Kühlsystem möglich, ohne aktives Heizen oder Kühlen den Transportcontainer vorzuwärmen oder vorzukühlen und damit den anfallenden Energiebedarf zu reduzieren. Dies wird dadurch ermöglicht, dass im Falle einer positiven Relation der Außentemperatur zur Wunsch-Innentemperatur Außenluft problemlos eingeleitet werden kann. Liegt z.B. die Solltemperatur des Transportcontainers bei 18°C, und die derzeitige Isttemperatur des Transportcontainers befindet sich bei -20°C, so ist es möglich eine Umgebungstemperatur von 30°C zum Aufheizen bzw. Aufwärmen der Transportcontainer von außen einzuleiten. Ein anderes Beispiel wäre eine Solltemperatur im Inneren des Transportcontainers von -20°C, eine Ist-Temperatur von 3°C in dem Container und eine Umgebungstemperatur von -10°C. Auch hier würde zum Herabkühlen der Innentemperatur ein Einleiten der -10°C kalten Umgebungstemperatur helfen, die Zieltemperatur von -20°C zu erreichen. Zumindest in einem ersten Abschnitt könnte die Innentemperatur nur durch Einleiten der Außenluft abgekühlt werden, bevor die Innentemperatur stärker als die Umgebungstemperatur gekühlt werden muss.

## Patentansprüche

1. Kühlsystem (1) für eine Transporteinheit, umfassend:
eine Zuluftöffnung (2) zum Ausströmen von konditionierter Luft (SA),
eine Umluftöffnung (3) zum Einströmen von Luft (RA) aus einem zu konditionierenden Raum,
einen Luftkanal (4), der die Umluftöffnung (3) und die Zuluftöffnung (2) miteinander verbindet, wobei
in dem Luftkanal (4) ein Verdampferelement (5) eines Kühlkreises angeordnet ist, wobei
mindestens eine erste Frischluftöffnung (6) zum Einströmen von Umgebungsluft (FA) in den Luftkanal (4) vorgesehen ist
**dadurch gekennzeichnet, dass**
insgesamt mindestens zwei Frischluftöffnungen (6, 61) vorhanden sind, wobei
die erste Frischluftöffnung (6) derart angeordnet ist, dass eine durch die erste Frischluftöffnung (6) einströmende Umgebungsluft (FA) die Zuluftöffnung (2) ohne Verlassen des Luftkanals (4) nur nach einem Durchströmen des Verdampferelements (5) erreicht, und
eine zweite Frischluftöffnung (61) derart angeordnet ist, dass eine durch die zweite Frischluftöffnung (61) einströmende Umgebungsluft (FA) die Zuluftöffnung (2) ohne Verlassen des Luftkanals (4) ohne Durchströmen des Verdampferelements (5) erreicht.

2. Kühlsystem (1) nach Anspruch 1, wobei das Verdampferelement (5) derart in dem Luftkanal (4) angeordnet ist, dass eine durch die Umluftöffnung (3) einströmende und durch die Zuluftöffnung (2) ausströmende Luft durch das Verdampferelement (5) strömen muss.

3. Kühlsystem (1) nach einem der vorhergehenden Ansprüche, ferner umfassend einen in dem Luftkanal (4) angeordneten Zuluftlüfter (7) zum Ausblasen von Luft aus der Zuluftöffnung (2), zum Ansaugen von Luft in die Umluftöffnung (3) und zum Ansaugen von Umgebungsluft (FA) in die erste Frischluftöffnung (6).

4. Kühlsystem (1) nach einem der vorhergehenden Ansprüche, ferner umfassend eine Fortluftöffnung (8) zum Ausströmen von Luft (EA) aus dem Luftkanal (4) an die Umgebung.

5. Kühlsystem (1) nach einer Kombination der vorhergehenden Ansprüche 3 und 4, wobei die Fortluftöffnung (8) bei einer Luftströmung von der Umluftöffnung (3) und/oder der ersten Frischluftöffnung (6) in Richtung des Zuluftlüfters (7) stromabwärts des Zuluftlüfters (7) angeordnet ist.

6. Kühlsystem (1) nach einem der vorhergehenden Ansprüche, ferner umfassend eine Fortluftöffnung (8) zum Ausströmen von Luft (EA) aus einem mit dem System zu konditionierenden Raum (20), wobei ein Kondensatorlüfter (9) des Kühlkreises des Kühlsystems (1) dazu ausgelegt ist, Luft aus der Fortluftöffnung (8) auszublasen.

7. Kühlsystem (1) nach einem der vorhergehenden Ansprüche, wobei die aus der Umluft abgezweigte Luftmenge, die später als Fortluft abgegeben wird, als Teilluftstrom über den Verflüssiger dient.

8. Kühlsystem (1) nach einem der vorhergehenden Ansprüche, wobei die Frischluftöffnungen (6, 61) und/oder die mindestens eine Fortluftöffnung (8) mit einem jeweiligen Verschlussmechanismus (10) versehen ist, der dazu ausgelegt ist, die Menge der durch die jeweilige Öffnung (6, 61, 8) strömenden Luft zu regulieren.

9. Kühlsystem (1) nach Anspruch 8, ferner umfassend eine Messeinrichtung zum Bestimmen eines Luftparameters und eine Steuereinheit zum Ansteuern des jeweiligen Verschlussmechanismus (10) der Frischluftöffnungen (6, 61) und/oder mindestens einer Fortluftöffnung (8), wobei die Steuereinheit dazu ausgelegt ist, in Abhängigkeit von mindestens einem durch die Messeinrichtung bestimmten Luftparameter einen Verschlussmechanismus (10) zu steuern.

10. Kühlsystem (1) nach Anspruch 9, wobei die Messeinrichtung einen Sensor zum Bestimmen eines Luftparameters, insbesondere einer Temperatur, einer Feuchte, eines CO₂-Gehalts, eines bestimmten Gases und/oder eines Luftdrucks umfasst, wobei vorzugsweise der Sensor dazu ausgelegt ist, die Luftparameter für Luft für die Umgebungsluft und/oder für innerhalb des durch das Kühlsystem (1) zu konditionierenden Raums zu erfassen.

11. Kühlsystem (1) nach einem der Ansprüche 8 bis 10, wobei der jeweilige Verschlussmechanismus (10) der Frischluftöffnungen (6, 61) und/oder der mindestens einen Fortluftöffnung (8) eine Verriegelung umfasst, um in einem geschlossenen Zustand des Verschlussmechanismus (10) eine Dichtheit zu gewährleisten.

12. Kühlanordnung, umfassend das Kühlsystem nach einem der vorhergehenden Ansprüche in einem Kältemodul, und wobei vorzugsweise die Kühlanordnung mindestens zwei entsprechende Kältemodule beinhaltet.

13. Kühlanordnung nach Anspruch 12, wobei zumindest zwei Kältemodule unterschiedliche Zonen im zu konditionierenden Raum mit Zuluft versorgen.

14. Vorrichtung nach einem der vorhergehenden Ansprüche, wobei das Kühlsystem (1) für eine Transporteinheit ein Kühlsystem (1) für einen Kühl-Sattelauflieger, einen Kühlanhänger oder einen Kühltransportcontainer ist.

## Claims

1. Cooling system (1) for a transport unit, comprising:
a supply air opening (2) for the outflow of conditioned air (SA),
a circulating-air opening (3) for the inflow of air (RA) from a space to be conditioned,
an air duct (4) that interconnects the circulating-air opening (3) and the supply air opening (2), wherein
an evaporator element (5) of a cooling circuit is arranged in the air duct (4),
wherein
at least one first fresh air opening (6) for the inflow of ambient air (FA) into the air duct (4) is provided,
**characterised in that**
at least two fresh air openings (6, 61) are provided in total, wherein
the first fresh air opening (6) is arranged such that ambient air (FA) flowing in through the first fresh air opening (6) reaches the supply air opening (2) without leaving the air duct (4), only after flowing through the evaporator element (5), and
a second fresh air opening (61) is arranged such that ambient air (FA) flowing in through the second fresh air opening (61) reaches the supply air opening (2) without leaving the air duct (4), without flowing through the evaporator element (5).

2. Cooling system (1) according to claim 1, wherein the evaporator element (5) is arranged in the air duct (4) such that air flowing in through the circulating-air opening (3) and flowing out through the supply air opening (2) has to flow through the evaporator element (5).

3. Cooling system (1) according to either of the preceding claims, further comprising a supply air fan (7) that is arranged in the air duct (4) and is intended for blowing air out of the supply air opening (2), for sucking air into the circulating-air opening (3), and for sucking ambient air (FA) into the first fresh air opening (6).

4. Cooling system (1) according to any of the preceding claims, further comprising an exhaust air opening (8) for the outflow of air (EA) out of the air duct (4) and into the surroundings.

5. Cooling system (1) according to a combination of the preceding claims 3 and 4, wherein the exhaust air opening (8) is arranged downstream of the supply air fan (7), in the case of an airflow from the circulating-air opening (3) and/or the first fresh air opening (6) towards the supply air fan (7).

6. Cooling system (1) according to any of the preceding claims, further comprising an exhaust air opening (8) for the outflow of air (EA) out of a space (20) to be conditioned using the system, wherein a condenser fan (9) of the cooling circuit of the cooling system (1) is designed to blow air out of the exhaust air opening (8).

7. Cooling system (1) according to any of the preceding claims, wherein the amount of air that is diverted out of the circulating air and is later discharged as exhaust air functions as a partial airflow across the condenser.

8. Cooling system (1) according to any of the preceding claims, wherein the fresh air openings (6, 61) and/or the at least one exhaust air opening (8) is provided with a closure mechanism (10) in each case, which mechanism is designed to regulate the amount of air flowing through the respective openings (6, 61, 8).

9. Cooling system (1) according to claim 8, further comprising a measuring means for determining an air parameter, and a control unit for actuating the relevant closure mechanism (10) of the fresh air openings (6, 61) and/or at least one exhaust air opening (8), wherein the control unit is designed to control a closure mechanism (10) on the basis of at least one air parameter determined by the measuring means.

10. Cooling system (1) according to claim 9, wherein the measuring means comprises a sensor for determining an air parameter, in particular a temperature, a humidity, a CO₂ content, a particular gas, and/or an air pressure, wherein the sensor is preferably designed to record the air parameters for air for the ambient air and/or for inside the space to be conditioned by the cooling system (1).

11. Cooling system (1) according to any of claims 8 to 10, wherein each closure mechanism (10) of the fresh air openings (6, 61) and/or of the at least one exhaust air opening (8) comprises a locking means in order to ensure tightness in a closed state of the closure mechanism (10).

12. Cooling assembly, comprising the cooling system according to any of the preceding claims in a refrigeration module, and wherein the cooling assembly preferably contains at least two corresponding refrigeration modules.

13. Cooling assembly according to claim 12, wherein at least two refrigeration modules supply different zones, in the space to be conditioned, with supply air.

14. Device according to any of the preceding claims, wherein the cooling system (1) for a transport unit is a cooling system (1) for a refrigerated semitrailer, a refrigerated trailer, or a refrigerated transport container.

## Revendications

1. Système frigorifique (1) pour une unité de transport, comprenant :
une ouverture d'air entrant (2) servant à diffuser de l'air conditionné (SA),
une ouverture d'air de recirculation (3) servant à faire affluer de l'air (RA) provenant d'une pièce à conditionner,
un canal d'air (4), qui relie l'ouverture d'air de recirculation (3) et l'ouverture d'air entrant (2) l'une à l'autre, dans lequel
un élément évaporateur (5) d'un circuit frigorifique est disposé dans le canal d'air (4), dans lequel
au moins une première ouverture d'air frais (6) est prévue pour faire affluer de l'air ambiant (FA) dans le canal d'air (4),
**caractérisé en ce que**
au total sont présentes au moins deux ouvertures d'air frais (6, 61), dans lequel la première ouverture d'air frais (6) est disposée de telle manière qu'un air environnant (FA) affluant à travers la première ouverture d'air frais (6) atteint l'ouverture d'air entrant (2) sans quitter le canal d'air (4) seulement après avoir traversé l'élément évaporateur (5), et
une deuxième ouverture d'air frais (61) est disposée de telle manière qu'un air ambiant (FA) affluant à travers la deuxième ouverture d'air frais (61) atteint l'ouverture d'air entrant (2) sans quitter le canal d'air (4) sans traverser l'élément évaporateur (5).

2. Système frigorifique (1) selon la revendication 1, dans lequel l'élément évaporateur (5) est disposé de telle manière dans le canal d'air (4) qu'un air affluant par l'ouverture d'air de recirculation (3) et sortant par l'ouverture d'air entrant (2) doit circuler à travers l'élément évaporateur (5).

3. Système frigorifique (1) selon l'une quelconque des revendications précédentes, comprenant en outre un ventilateur d'air entrant (7) disposé dans le canal d'air (4) servant à souffler de l'air hors de l'ouverture d'air entrant (2), servant à aspirer de l'air dans l'ouverture d'air de recirculation (3) et servant à aspirer de l'air ambiant (FA) dans la première ouverture d'air frais (6).

4. Système frigorifique (1) selon l'une quelconque des revendications précédentes, comprenant en outre une ouverture d'air d'échappement (8) servant à faire sortir de l'air (EA) du canal d'air (4) vers l'environnement.

5. Système frigorifique (1) selon une combinaison des revendications précédentes 3 et 4, dans lequel l'ouverture d'air d'échappement (8) est disposée dans le cas d'un flux d'air depuis l'ouverture d'air de recirculation (3) et/ou de la première ouverture d'air frais (6) en direction du ventilateur d'air entrant (7) en aval du ventilateur d'air entrant (7).

6. Système frigorifique (7) selon l'une quelconque des revendications précédentes, comprenant en outre une ouverture d'air d'échappement (8) servant à faire sortir de l'air (EA) hors d'une pièce (20) à conditionner avec le système, dans lequel un ventilateur de condenseur (9) du circuit frigorifique du système frigorifique (1) est configuré pour souffler de l'air hors de l'ouverture d'air d'échappement (8).

7. Système frigorifique (1) selon l'une quelconque des revendications précédentes, dans lequel la quantité d'air détournée de l'air de recirculation, qui est envoyée ultérieurement en tant qu'air d'échappement, fait office de flux d'air partiel par l'intermédiaire du condenseur.

8. Système frigorifique (1) selon l'une quelconque des revendications précédentes, dans lequel les ouvertures d'air frais (6, 61) et/ou l'au moins une ouverture d'air d'échappement (8) sont pourvues d'un mécanisme de fermeture (10) respectif, qui est configuré pour réguler la quantité de l'air circulant à travers l'ouverture (6, 61, 8) respective.

9. Système frigorifique (1) selon la revendication 8, comprenant en outre un système de mesure servant à définir un paramètre d'air et une unité de commande servant à piloter le mécanisme de fermeture (10) respectif des ouvertures d'air frais (6, 61) et/ou d'au moins une ouverture d'air d'échappement (8), dans lequel l'unité de commande est configurée pour commander en fonction d'au moins un paramètre d'air défini par le système de mesure un mécanisme de fermeture (10).

10. Système frigorifique (1) selon la revendication 9, dans lequel le système de mesure comprend un capteur servant à définir un paramètre d'air, en particulier une température, une humidité, une teneur en CO₂, un gaz défini et/ou une pression d'air, dans lequel de préférence le capteur est configuré pour détecter les paramètres d'air pour l'air pour l'air ambiant et/ou pour l'intérieur de la pièce à conditionner par le système frigorifique (1).

11. Système frigorifique (1) selon l'une quelconque des revendications 8 à 10, dans lequel le mécanisme de fermeture (10) respectif des ouvertures d'air frais (6, 61) et/ou de l'au moins une ouverture d'air d'échappement (8) comprend un verrouillage pour garantir dans un état fermé du mécanisme de fermeture (10) une étanchéité.

12. Ensemble frigorifique comprenant le système frigorifique selon l'une quelconque des revendications précédentes dans un module réfrigérant, et dans lequel de préférence l'ensemble frigorifique renferme au moins deux modules réfrigérants correspondants.

13. Ensemble frigorifique selon la revendication 12, dans lequel au moins deux modules réfrigérants alimentent en air entrant différentes zones dans la pièce à conditionner.

14. Dispositif selon l'une quelconque des revendications précédentes, dans lequel le système frigorifique (1) pour une unité de transport est un système frigorifique (1) pour un semi-remorque frigorifique, une remorque frigorifique ou un conteneur de transport frigorifique.
